# EUROPÄISCHE PATENTSCHRIFT

(11) **EP 0 572 821 B1**
(45) Veröffentlichungstag und Bekanntmachung des Hinweises auf die Patenterteilung: **17.01.1996**
(21) Anmeldenummer: 93107623.6
(22) Anmeldetag: 11.05.1993
(51) Int. Cl.: B62D 1/19

(54) **Kraftfahrzeuglenksäule**
Vehicle steering column
Colonne de direction de voiture

(30) Priorität: 03.06.1992 DE 9207473 U; 20.04.1993 DE 9305830 U
(43) Veröffentlichungstag der Anmeldung: 08.12.1993
(73) Patentinhaber: REICHE & CO., D-32791 Lage (DE)
(72) Erfinder: Arnold, Hans, W-4937 Lage (DE); Breuer, Manfred, W-4802 Halle/Westfalen (DE)
(74) Vertreter: Stracke, Alexander, Dipl.-Ing.

(56) Entgegenhaltungen:
- DE-U- 8 534 668
- FR-A- 1 560 116
- FR-A- 2 508 860
- US-A- 1 762 181
- US-A- 3 508 633
- US-A- 3 665 777
- US-A- 4 512 209

## Beschreibung

Die Erfindung betrifft eine Kraftfahrzeuglenksäule aus einem drehbaren, teleskopierbaren Lenkinnenrohr und einem feststehenden, mit einer in axialer Richtung der Lenksäule stauchbaren Verformungszone versehenen Lenksäulengehäuse, wobei das Gehäuse aus einem äußeren Absorberrohr und einem innenliegenden Versteifungsrohr besteht, dessen eines Ende fest mit dem Absorberrohr verbunden ist und dessen anderes freies Ende axial verschieblich im Absorberrohr gelagert ist oder bei der das Versteifungsrohr als Teleskoprohr mit einem Außenrohr und einem Einsteckrohr ausgebildet ist, dessen einander abgewandte Seiten fest mit dem Absorberrohr verbunden sind. Eine solche Lenksäule ist zum Beispiel aus der US-A-3 508 633 bekannt.

Kraftfahrzeuglenksäulen werden zur Begrenzung der Aufprallkraft eines Kraftfahrzeuglenkers auf dem Lenkradkranz mit Verformungszonen ausgestattet. Diese Verformungszonen stauchen sich während eines Aufpralls in axialer Richtung und vernichten auf diese Weise Bewegungsenergie. Sogenannte Wellrohre haben sich hier als Verformungszonen für Kraftfahrzeuglenksäulen allgemein durchgesetzt.

Im Rahmen der Erhöhung der passiven Sicherheit von Kraftfahrzeugen wird in Zukunft neben dem Sicherheitsgurt ein Airbagsicherheitssystem verstärkt in Kraftfahrzeuge eingebaut werden. Die Airbagmasse erzeugt bedingt durch den Schrägeinbau der Lenksäule hierbei ein zusätzliches Biegemoment, welches auf das Lenksäulengehäuse übertragen wird. Es hat sich gezeigt, daß insbesondere im Bereich der wellrohrartig ausgestalteten Verformungszone des Lenksäulengehäuses eine ausreichende Biegesteifigkeit gewährleistet sein muß.

Um dieses Ziel zu erreichen, sind beispielsweise aus der US-A-3 508 633 Figur 3 und Figur 6 Lösungen bekannt, bei denen zum einen innen in das Absorberrohr ein zweites sogenanntes Versteifungsrohr eingeschoben wird, welches auf der einen Seite mit dem Absorberrohr fest verbunden ist. Dieses Versteifungsrohr kann auch als Teleskoprohr, bestehend aus einem Außenrohr und einem darin eingeschobenen Innerohr gestaltet sein, wobei die nicht ineinandergeschobenen Enden von Außen- und Innenrohr am außenliegenden Absorberrohr festgelegt sind.

Solche Ausgestaltungen von Kraftfahrzeuglenksäulen mit dem Ziel, die Biegesteifigkeit zu erhöhen, sind insofern problematisch, als daß sich im Bereich der axialen Verschieblichkeit zwischen Versteifungsrohr und Absorberrohr bzw. im Bereich der Überlappung von Teleskopinnen- und -außenrohr infolge von Fertigungsungenauigkeiten und Toleranzen ein Spiel einstellt, was zu unerwünschten Klappergeräuschen der Lenksäule im Kraftfahrzeugfahrbetrieb führt. Diese durch unerwünschte Schwingungen hervorgerufenen Klappergeräusche sind insbesondere auch dann nachteilig, wenn die Gesamtbaugruppe der Lenksäule keine ausreichende Eigenfrequenz besitzt.

Aufgabe der vorliegenden Erfindung ist es daher, eine ausreichende Eigenfrequenz der Kraftfahrzeuglenksäule sicherzustellen und das Auftreten von Klappergeräuschen im Fahrbetrieb zu vermeiden.

Die Aufgabe wird erfindungsgemäß durch die im kennzeichnenden Teil des Anspruches 1 oder des Anspruches 7 aufgeführten Merkmale gelöst.

Das geringfügige Übermaß der zueinander gehörigen Verbindungsabschnitte am Absorberrohr und am Versteifungsrohr vor dem Zusammenbau ermöglicht eine radial spielfreie Lagerung des Versteifungsrohres, da sich während des Zusammenfügens der Bauteile durch Formveränderung das Absorberrohr spielfrei an das Versteifungsrohr anschmiegt. Es hat sich insbesondere als vorteilhaft erwiesen, in der Verbindungszone von Absorberrohr und Versteifungsrohr einem der beiden eine in axialer Richtung gesehen wellenartige Struktur zu geben, da dies den Zusammenbau erleichtert und sich während des Zusammenfügens der Bauteile die Wellenberge des mit einer wellenartigen Struktur versehenen Rohres an die Verbindungsfläche des korrespondierenden Rohres besonders gut anschmiegt.

Die bevorzugte Ausgestaltung der Verbindungsfläche von Absorber- und Versteifungsrohr als in axialer Richtung gesehen wellenartige Ausführungsform macht den Einsatz weiterer Lagerungsbauteile überflüssig und ermöglicht somit eine besonders kostengünstige Fertigung.

Bei der Ausbildung der Kraftfahrzeuglenksäule nach Anspruch 7 entspricht die Überlappungslänge von Einsteckrohr und Außenrohr mindestens dem doppelten Außendurchmesser des Außenrohres, wobei ein Rohr des teleskopartigen Versteifungsrohres als Federhülse ausgebildet ist. Die Federhülse erzeugt durch ihre Spannung einen spielfreien Schiebesitz, wobei die axialen Verschiebekräfte gering gehalten werden können. Die Spielfreiheit des Schiebesitzes gewährleistet, daß eine Geräuschbildung während des Fahrzeugbetriebes zuverlässig ausgeschlossen wird. Dieses wird außerdem dadurch unterstützt, daß das Absorberrohr die Überlappungsstelle vollständig umschließt.

Durch die vorteilhafte Gestaltung der Kraftfahrzeuglenksäule derart, daß das Absorberrohr an dem am Lenkrad zugewandten Ende in axialer Richtung verlaufende, über den Umfang verteilte Einprägungen besitzt, die als Verbindung zwischen Absorberrohr und Teleskopaußenrohr eine Art Preßschiebesitz herstellen, wird die Eigenfrequenz der Gesamtbaugruppe Lenksäule erhöht. Dies führt dazu, infolge Resonanzwirkung auftretende Eigenschwingungen zu vermeiden.

Weitere Ausgestaltungen der Erfindung ergeben sich aus den Unteransprüchen.

Ausführungsbeispiele des Gegenstandes der Erfindung werden im folgenden anhand der beigefügten Zeichnungen näher erläutert.

Es zeigen:
- Fig. 1: eine Lenksäule der erfindungsgemäßen Art im Längsschnitt,
- Fig. 2: Querschnitt durch die Lenksäule aus Fig. 1 entlang BB,
- Fig. 3: ein weiteres Ausführungsbeispiel einer Kraftfahrzeuglenksäule,
- Fig. 4: vergrößerte Darstellung des Verbindungsbereiches von Außenrohr und Versteifungsrohr,
- Fig. 5: ein Schnittbild einer Abwandlung der Lenksäule nach Fig. 1,
- Fig. 6: einen Schnitt nach der Linie A-A in Fig. 5,
- Fig. 7: Ansicht des Details III in Fig. 5 und
- Fig. 8: Detail IV aus Fig. 5.

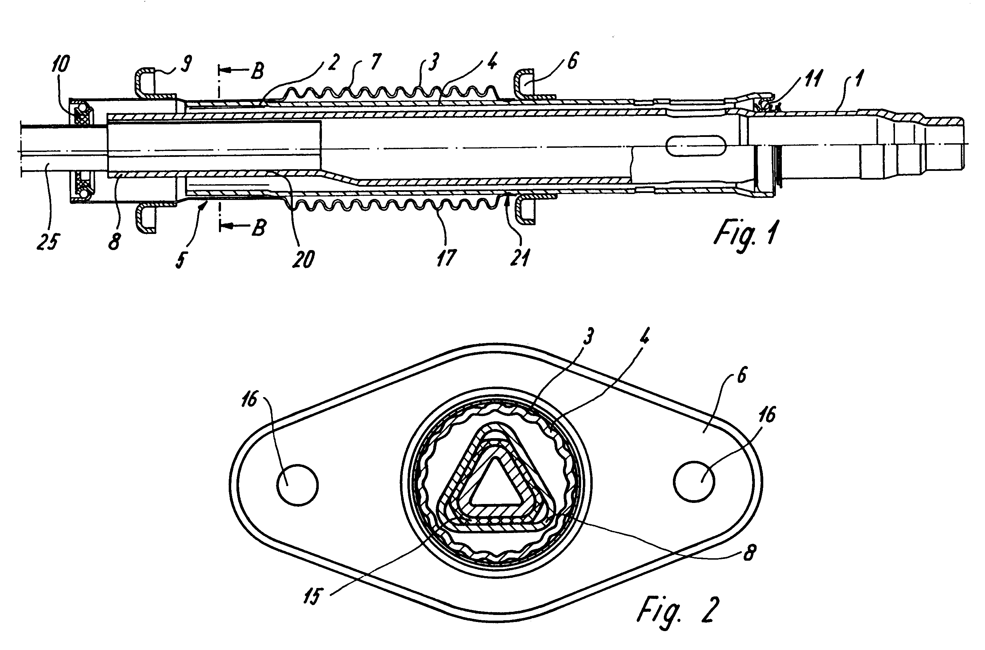

Bei der in Figur 1 veranschaulichten Kraftfahrzeuglenksäule ist ein Lenkinnenrohr 1 in einem Lenkgehäuse 2 mit Hilfe der Lagerungen 10 und 11 drehbar gelagert. Das Lenkinnenrohr besteht aus einer Lenkinnenrohrhülse 8 und einem Innenteil 25 wobei das Innenteil 25 an der Stelle 20 in die Lenkinnenrohrhülse 8 eingreift und dort axial verschieblich ist. Die Figur 2 zeigt deutlich, daß an der Stelle der Überlappung von Lenkinnenrohrhülse 8 und Innenteil 25 beide Bauteile einen dreieckigen Querschnitt aufweisen, wobei zwischen ihnen ein Gleitlagerelement 15 angeordnet ist.

Das Lenksäulengehäuse 2 besteht aus einem Versteifungsrohr 4 und einem Außenrohr 3 und ist an der Karosserie des Fahrzeuges durch die beiden Aufhängungen 6 und 9 befestigt, wobei die Aufhängung 6 mit dem Versteifungsrohr und die Aufhängung 9 mit dem Außenrohr fest verbunden ist und beide Aufhängungen je zwei Durchstecklöcher 16 für Schrauben besitzen. Das Außenrohr 3 besitzt eine Verformungszone, die als Wellrohr 17 ausgebildet ist.

In das Außenrohr 3 ist das Versteifungsrohr 4 eingeschoben. An der Stelle 21 sind beide Rohre miteinander verschweißt. Der Endbereich des Versteifungsrohres 4 im Bereich des Schnittes BB ist erfindungsgemäß als Verbindungsfläche 5 zwischen Außenrohr 3 und Versteifungsrohr 4 ausgebildet. Figur 2 macht deutlich, daß das Versteifungsrohr 4 an der Verbindungsfläche 5 in axialer Richtung wellenartig geformt ist, wobei die Wellenberge die Innenfläche des Außenrohres berühren. Der Außendurchmesser des wellenförmig gestalteten Teilbereiches des Versteifungsrohres wird geringfügig größer gefertigt als der Innendurchmesser des Außenrohres. Bei der Montage der Lenksäule weitet sich das flexible Außenrohr etwas und schmiegt sich spielfrei an die Wellenberge der Innenkontur an, so daß sich eine axial verschiebliche, aber radial spielfreie Lagerung des Versteifungsrohres 4 im Außenrohr 3 ergibt.

Natürlich ist auch die Möglichkeit realisierbar, die wellenartige Ausformung am Außenrohr 3 anzubringen, wobei die glatte Außenkontur des Versteifungsrohres 4 sich an die Innenseite des wellenförmigen Teilbereiches des Außenrohres 3 anschmiegt. Ein leichtes Übermaß des Außendurchmessers des Versteifungsrohres 4 oder ein geringfügiges Untermaß des Innendurchmessers des Außenrohres 3 sorgt auch hier nach dem Zusammenbau für radiale Spielfreiheit zwischen Außenrohr 3 und Versteifungsrohr 4.

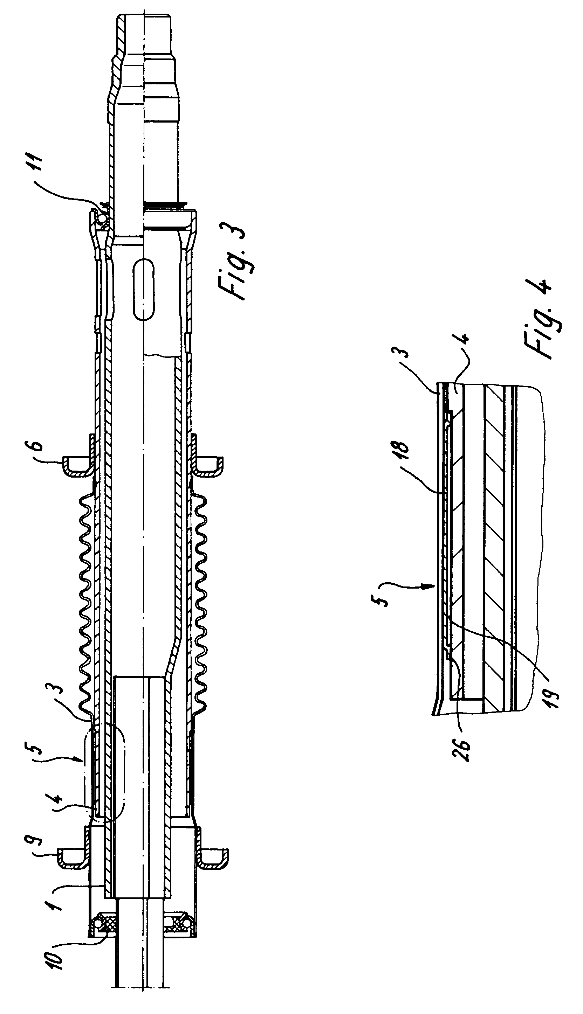

Die Kraftfahrzeuglenksäule der erfindungsgemäßen Art in Figur 3 entspricht im wesentlichen der oben beschriebenen Lenksäule aus Figur 1. Die Verbindungsfläche 5 ist in diesem Ausführungsbeispiel durch eine ringförmige Buchse 18 zwischen Außenrohr 3 und Versteifungsrohr 4 verwirklicht. In der Figur 4 wird deutlich, daß die Buchse an der Innenseite eine Ausnehmung 19 aufweist. Die seitlichen Randbereiche 26, die sich an die Ausnehmung anschließen, berühren die Außenseite des Versteifungsrohres 4, während sich das Außenrohr 3 mit seiner Innenseite an der Außenfläche der Buchse abstützt.

Natürlich sind auch andere Ausgestaltungen der Buchse denkbar, z. B. kann sie in axialer Richtung wellenartig geformt sein ähnlich der oben beschriebenen Verbindungsfläche 5 zwischen Versteifungsrohr 4 und Außenrohr 3.

Hat die Lenksäule in Falle eines Unfalls Kräfte in axialer Richtung aufzunehmen, so wird sich die als Wellrohr 17 ausgebildete Verformungszone um ein bestimmtes Maß zusammenstauchen. Die Länge der Gleitzone zwischen Außenrohr 3 und Versteifungsrohr 4 entspricht in etwa der maximalen Länge, um die sich das Wellrohr 17 verkürzen kann, so daß in jedem Fall eine ausreichende Gleitführung vorhanden ist.

Die in ihrer Gesamtheit mit 30 bezeichnete Kraftfahrzeuglenksäule besitzt ein Lenkrohr 32, das mit Hilfe der Lager 33,34 in einem Gehäuse 35 drehbar gelagert ist. Das Gehäuse 35 ist mit den Aufhängungen 36 und 37 an Kraftfahrzeugchassis festgelegt. Das Gehäuse 35 besitzt einen im wesentlichen zylindrischen Querschnitt und ist als Teleskoprohr mit einem dem lenkradseitigen Ende benachbarten Außenrohr 39 und einem dem vorderen Ende der Lenksäule benachbarten Einsteckrohr 40 ausgeführt. Das Einsteckrohr 40 ist in das Außenrohr 39 so weit eingeschoben, daß sich eine Stützlänge L ergibt, die dem doppelten Außendurchmesser des Außenrohres 39 entspricht. An seinen in das Außenrohr 39 eingeschobenen Ende ist das Einsteckrohr mit einem kugelabschnittartig ausgeformten Bereich 47 versehen, wie dies die Fig. 7 zeigt.

Die Überlappungsstelle von Außenrohr 39 und Einsteckrohr 40 ist von einem Absorberrohr 41 umschlossen, das eine im Längsschnitt wellenförmige Struktur aufweist, um im Falle eines Unfalls durch berechnete Stauchung Aufprallenergie aufzunehmen. Die wellenförmige Struktur des Absorberrohres 41 ist zwischen den Aufhängungen 36 und 37 angeordnet, wobei das Absorberrohr 41 an seinem der Aufhängung 37 zugewandten Ende sowohl mit dem Einsteckrohr 40 als auch mit der Aufhängung 37 gemeinsam verschweißt ist.

Das der Aufhängung 36 zugewandte Ende des Absorberrohres ist mit dem Außenrohr 39 des Teleskoplenkgehäuses verprägt. Aus Fig. 8 wird deutlich, daß zu diesem Zweck das Absorberrohr 41 mehrere in axialer Richtung verlaufende, über dem Umfang des Absorberrohres verteilte Einprägungen 43 aufweist. Das Ende des Absorberrohres 41 ist im Winkel von 90° nach außen flanschartig abgewinkelt. An das mit den Einprägungen 43 versehene Gebiet des Absorberrohres 41 schließt sich das wellenartig geformte Stauchgebiet 44 unmittelbar an.

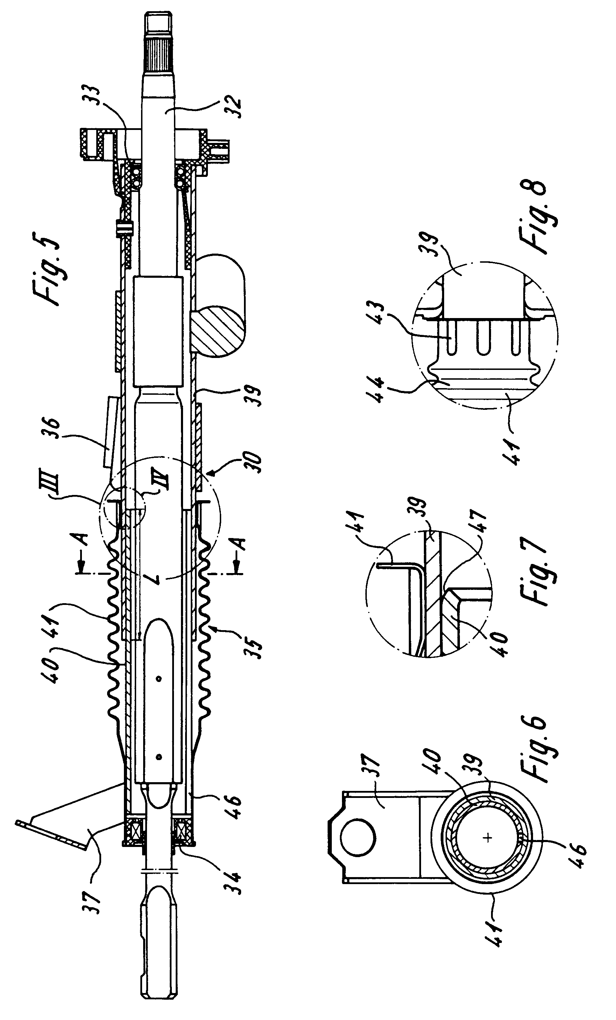

Der in Fig. 6 dargestellte Schnitt durch die erfindungsgemäße Kraftfahrzeuglenksäule in Höhe des Überlappungsgebietes zwischen Außenrohr 39 und Einsteckrohr 40 macht deutlich, daß das Einsteckrohr 40 an seiner der Aufhängung 37 abgewandten Unterseite einen Schlitz 46 besitzt. dieser Schlitz 46 erstreckt sich vom in das Außenrohr 39 eingesteckten Ende bis unmittelbar vor die Lagerstelle für das Lager 34 des Lenkrohres 32. Da das Einsteckrohr 40 aus kaltverfestigtem Stahl hergestellt ist, ergibt sich durch den Schlitz 46 für das Einsteckrohr 46 die Wirkung einer Federhülse. Beim Zusammenbau der Kraftfahrzeuglenksäule wird der Querschnitt des Einsteckrohres geringfügig verkleinert, so daß ein Einführen in das Außenrohr 39 ohne Schwierigkeiten möglich ist. Nach dem Einführen des Einsteckrohres 46 federt dieses gegen die Innenwandung des Außenrohres 39, es stellt sich somit eine spalt- und spielfreie, aber dennoch axial leicht verschiebliche Verbindung ein.

## Patentansprüche

1. Kraftfahrzeuglenksäule aus einem drehbaren, teleskopierbaren Lenkinnenrohr und einem feststehenden, mit einer in axialer Richtung der Lenksäule stauchbaren Verformungszone versehenen Lenksäulengehäuse, wobei das Gehäuse aus einem äußeren Absorberrohr und einem innenliegenden Versteifungsrohr besteht, dessen eines Ende fest mit dem Absorberrohr verbunden ist und dessen anderes freies Ende axial verschieblich im Absorberrohr gelagert ist, **dadurch gekennzeichnet**, daß durch Verbindungsflächen (5) zwischen Versteifungsrohr (4) und Absorberrohr (3) eine radial spielfreie Lagerung des Versteifungsrohres (4) im Absorberrohr (3) gegeben ist, wobei die Maße der korrespondierenden Außen- und Innenquerschnitte der Verbindungsflächen im nicht zusammengebauten Zustand von Absorberrohr (3) und Versteifungsrohr (4) ein geringes Übermaß zueinander aufweisen.

2. Kraftfahrzeuglenksäule nach Anspruch 1, dadurch gekennzeichnet, daß die Verbindungsfläche (5) zwischen Absorberrohr (3) und Versteifungsrohr (4) am Versteifungsrohr (4) in axialer Richtung gesehen wellenartig geformt ist.

3. Kraftfahrzeuglenksäule nach Anspruch 1, dadurch gekennzeichnet, daß die Verbindungsfläche (5) zwischen Absorberrohr (3) und Versteifungsrohr (4) am Absorberrohr (3) in axialer Richtung gesehen wellenartig geformt ist.

4. Kraftfahrzeuglenksäule nach Anspruch 2, dadurch gekennzeichnet, daß der Innendurchmesser der am Absorberrohr (3) wellenartig geformten Verbindungsfläche (5) vor dem Zusammenbau der Lenksäule geringfügig kleiner ist als der Außendurchmesser des Versteifungsrohres (4).

5. Kraftfahrzeuglenksäule nach Anspruch 1, dadurch gekennzeichnet, daß die Verbindungsflächen (5) durch eine zwischen Absorberrohr (3) und Versteifungsrohr (4) angeordnete, in axialer Richtung gesehen, wellenartig profilierte Buchse (18) hergestellt sind.

6. Kraftfahrzeuglenksäule nach einem oder mehreren der vorangeganenen Ansprüche, dadurch gekennzeichnet, daß der relativ axiale Verschiebeweg des Versteifungsrohres (4) in bezug auf das Absorberrohr (3) im wesentlichen der Länge der Verbindungsfläche (5) von Versteifungsrohr (4) und Absorberrohr (3) entspricht.

7. Kraftfahrzeuglenksäule aus einem drehbaren, teleskopierbaren Lenkinnenrohr und einem feststehenden, mit einer in axialer Richtung der Lenksäule stauchbaren Verformungszone versehenen Lenksäulengehäuse, wobei das Gehäuse aus einem äußeren Absorberrohr und einem innenliegenden als Teleskoprohr mit einem Außenrohr und einem Einsteckrohr ausgebildeten Versteifungsrohr gebildet ist und ein Ende des Versteifungsrohres mit dem Absorberrohr verbunden ist, dadurch gekennzeichnet, daß die Überlappungslänge von Einsteckrohr (40) und Außenrohr (39) mindestens dem doppelten Außendurchmesser des Außenrohres (39) entspricht und ein Rohr des teleskopartigen Versteifungsrohres als Federhülse ausgebildet ist.

8. Kraftfahrzeuglenksäule nach Anspruch 7, dadurch gekennzeichnet, daß die Federhülse einen über die Gesamtlänge der Hülse verlaufenden Schlitz (46) aufweist.

9. Kraftfahrzeuglenksäule nach Anspruch 7 oder 8, dadurch gekennzeichnet, daß die Federhülse aus kalt verfestigtem Stahl hergestellt ist.

10. Kraftfahrzeuglenksäule nach Anspruch 7, dadurch gekennzeichnet, daß das Absorberrohr (41) an dem dem Lenkrad zugewandten Ende mit dem Teleskopaußenrohr (39) durch in axialer Richtung verlaufende, über den Umfang des Absorberrohres verteilte Einprägungen (43) in der Art eines Preßschiebesitzes versehen ist.

11. Kraftfahrzeuglenksäule nach Anspruch 7, dadurch gekennzeichnet, daß das Einsteckrohr (40) an dem in dem Außenrohr (39) eingeführten Ende als Kugelabschnitt (47) ausgeformt ist.

## Claims

1. A motor vehicle steering column comprising a rotatable telescopic steering inner tube and a fixed steering column housing provided with a deformation zone which can be upset in the axial direction of the steering column, wherein the housing comprises an outer absorber tube and an inwardly disposed stiffening tube of which one end is fixedly connected to the absorber tube and the other free end is axially displaceably mounted in the absorber tube, characterised in that a radially play-free mounting for the stiffening tube (4) in the absorber tube (3) is afforded by connecting surfaces (5) between the stiffening tube (4) and the absorber tube (3), wherein the dimensions of the corresponding outer and inner cross-sections of the connecting surfaces, in the non-assembled condition of the absorber tube (3) and the stiffening tube (4), have a slight oversize relative to each other.

2. A motor vehicle steering column according to claim 1 characterised in that the connecting surface (5) between the absorber tube (3) and the stiffening tube (4) is formed on the stiffening tube (4) in a wave-like configuration as viewed in the axial direction.

3. A motor vehicle steering column according to claim 1 characterised in that the connecting surface (5) between the absorber tube (3) and the stiffening tube (4) is formed on the absorber tube (3) in a wave-like configuration as viewed in the axial direction.

4. A motor vehicle steering column according to claim 2 characterised in that the inside diameter of the connecting surface (5) which is formed in a wave-like shape on the absorber tube (3) is slightly smaller, prior to assembly of the steering column, than the outside diameter of the stiffening tube (4).

5. A motor vehicle steering column according to claim 1 characterised in that the connecting surfaces (5) are produced by a bush (18) which is arranged between the absorber tube (3) and the stiffening tube (4) and which is profiled in a wave-like configuration as viewed in the axial direction.

6. A motor vehicle steering column according to one or more of the preceding claims characterised in that the relative axial displacement travel of the stiffening tube (4) in relation to the absorber tube (3) substantially corresponds to the length of the connecting surface (5) of the stiffening tube (4) and the absorber tube (3).

7. A motor vehicle steering column comprising a rotatable telescopic steering inner tube and a fixed steering column housing provided with a deformation zone which can be upset in the axial direction of the steering column, wherein the housing is formed from an outer absorber tube and an inwardly disposed stiffening tube in the form of a telescopic tube having an outer tube and an insert tube, and one end of the stiffening tube is connected to the absorber tube, characterised in that the overlap length of the insert tube (40) and the outer tube (39) corresponds at least to double the outside diameter of the outer tube (39) and one tube of the telescopic stiffening tube is in the form of a spring sleeve.

8. A motor vehicle steering column according to claim 7 characterised in that the spring sleeve has a slot (46) extending over the entire length of the sleeve.

9. A motor vehicle steering column according to claim 7 or claim 8 characterised in that the spring sleeve is produced from cold-hardened steel.

10. A motor vehicle steering column according to claim 7 characterised in that at the end towards the steering wheel the absorber tube (41) is connected to the telescopic outer tube (39) by impression portions (43) extending in the axial direction and distributed over the periphery of the absorber tube, in the manner of a press sliding fit.

11. A motor vehicle steering column according to claim 7 characterised in that the insert tube (40) is in the form of a cone portion (47) at the end inserted in the outer tube (39).

## Revendications

1. Colonne de direction pour véhicule à moteur composée d'un tube de direction intérieur capable de rotation et télescopique et d'un boîtier de colonne de direction, pourvu d'une zone déformable capable d'écrasement dans le sens axial de la colonne de direction, le boîtier se composant d'un tube absorbant extérieur et d'un tube raidisseur intérieur, dont une extrémité est fixée au tube absorbant et dont l'autre extrémité libre est supportée de manière mobile dans le sens axial dans le tube absorbant, caractérisée en ce que des surfaces de liaison (5) entre le tube raidisseur (4) et le tube absorbant (3) assurent un montage sans jeu radial du tube raidisseur (4) dans le tube absorbant (3), les dimensions des sections extérieure et intérieure correspondantes des surfaces de liaison présentant un léger surdimensionnement de l'une par rapport à l'autre lorsque le tube absorbant (3) et le tube raidisseur (4) ne sont pas assemblés.

2. Colonne de direction de véhicule à moteur selon la revendication 1, caractérisée en ce que la surface de liaison (5) entre le tube absorbant (3) et le tube raidisseur (4) est de forme ondulée dans le sens axial sur le tube raidisseur (4).

3. Colonne de direction de véhicule à moteur selon la revendication 1, caractérisée en ce que la surface de liaison (5) entre le tube absorbant (3) et le tube raidisseur (4) est de forme ondulée dans le sens axial sur le tube absorbant (3).

4. Colonne de direction de véhicule à moteur selon la revendication 2, caractérisée en ce que le diamètre intérieur de la surface de liaison (5) ondulée formée sur le tube absorbant (3) est légèrement plus petite que le diamètre extérieur du tube absorbant (4) avant l'assemblage de la colonne de direction.

5. Colonne de direction de véhicule à moteur selon la revendication 1, caractérisée en ce que les surfaces de liaison (5) sont réalisées par une douille (18) profilée en ondulations dans le sens axial, disposée entre le tube absorbant (3) et le tube raidisseur (4).

6. Colonne de direction de véhicule à moteur selon une ou plusieurs des revendication précédentes, caractérisée en ce que le trajet de déplacement axial relatif du tube raidisseur (4) par rapport au tube absorbant (3) correspond sensiblement à la longueur de la surface de liaison (5) du tube raidisseur (4) et du tube absorbant (3).

7. Colonne de direction de véhicule à moteur composée d'un tube de direction intérieur capable de rotation et télescopique et d'un boîtier de colonne, pourvu d'une zone déformable capable d'écrasement dans le sens axial de la colonne de direction, le boîtier se composant d'un tube absorbant extérieur et d'un tube raidisseur intérieur conçu comme un tube télescopique avec un tube extérieur et un tube inséré et une extrémité du tube raidisseur étant reliée au tube absorbant, caractérisée en ce que la longueur de chevauchement du tube inséré (40) et du tube extérieur (39) correspond au moins au double du diamètre extérieur du tube extérieur (39) et qu'un tube du tube raidisseur télescopique est conçu comme un manchon à ressort.

8. Colonne de direction de véhicule à moteur selon la revendication 7, caractérisée en ce que le manchon à ressort présente une fente (46) courant sur toute la longueur du manchon.

9. Colonne de direction de véhicule à moteur selon la revendication 7 ou 8, caractérisée en ce que le manchon à ressort est formé à partir d'acier durci à froid.

10. Colonne de direction de véhicule à moteur selon la revendication 7, caractérisée en ce que le tube absorbant (41) est pourvu, à l'extrémité orientée vers le volant portant le tube télescopique extérieur (39), d'empreintes (43) orientées dans le sens axial et réparties sur la circonférence du tube absorbant à la manière d'un ajustement coulissant à pression.

11. Colonne de direction de véhicule à moteur selon la revendication 7, caractérisée en ce que le tube inséré (40) est conformé comme un segment de sphère (47) à l'extrémité introduite dans le tube extérieur (39).
